(19) Europäisches Patentamt
European Patent Office
Office européen des brevets

(11) **EP 1 595 929 B1**

(12) **EUROPEAN PATENT SPECIFICATION**

(45) Date of publication and mention
of the grant of the patent:
**18.04.2007 Bulletin 2007/16**

(51) Int Cl.:
*C09J 133/06* $^{(2006.01)}$  *C09J 171/00* $^{(2006.01)}$
*C09J 11/04* $^{(2006.01)}$

(21) Application number: **05010330.8**

(22) Date of filing: **12.05.2005**

(54) **Pressure-sensitive adhesive composition, pressure-sensitive adhesive sheets, and surface protecting film**

Druckempfindliche Klebstoffzusammensetzung, druckempfindliche Klebefolien, und Oberflächenschutzfilm

Composition adhésive sensible à la pression, feuilles adhésives sensibles à la pression, et film de protection de suface

(84) Designated Contracting States:
**BE DE FR GB IT**

(30) Priority: **14.05.2004 JP 2004145206**

(43) Date of publication of application:
**16.11.2005 Bulletin 2005/46**

(73) Proprietor: **NITTO DENKO CORPORATION Ibaraki-shi, Osaka 567-8680 (JP)**

(72) Inventors:
• **Amano, Tatsumi Ibaraki-shi, Osaka 567-8680 (JP)**
• **Ando, Masahiko Ibaraki-shi, Osaka 567-8680 (JP)**

(74) Representative: **TBK-Patent Bavariaring 4-6 80336 München (DE)**

(56) References cited:
**US-A- 5 433 892**

• **DATABASE WPI Section Ch, Week 199423 Derwent Publications Ltd., London, GB; Class A14, AN 1994-189173 XP002343566 & JP 06 128539 A (NITTO DENKO CORP) 10 May 1994 (1994-05-10)**

Remarks:
The file contains technical information submitted after the application was filed and not included in this specification

EP 1 595 929 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to an acryl-based pressure-sensitive adhesive composition. More particularly, the present invention relates to an antistatic pressure-sensitive adhesive composition, and pressure-sensitive adhesive sheets using the same. In particular, pressure-sensitive adhesive sheets of the present invention are useful as a surface protecting film (a protecting film) used for the purpose of protecting a surface of an optical member such as a polarizing plate, a wavelength plate, a retardation plate, an optical compensating film, a reflecting sheet, and a luminance improving film which are used as a liquid crystal display.

In recent years, upon transportation of optical appliances or electronic appliances and packaging of those parts on a printed board, individual parts are frequently transferred in the state where they are wrapped with a prescribed sheet, or in the state where they are applied to a pressure-sensitive adhesive tape. Among them, a surface protecting film is particularly widely used in the field of optical-electronic parts.

A surface protecting film is generally used for the purpose of preventing a scratch or a stain produced at processing or conveyance of a subject to be protected by applying to a subject to be protected via a pressure-sensitive adhesive layer coated on a protecting film side. For example, for the purpose of preventing a scratch or a stain, a surface protecting film is applied to an optical member such as a polarizing plate and a brightness enhancement plate used in a panel of a liquid crystal display via a pressure-sensitive adhesive layer.

When a liquid crystal display is produced with these optical members, since a surface protecting film becomes unnecessary, it is peeled and removed from an optical member.

Since the aforementioned optical member, pressure-sensitive adhesive, and surface protecting film are constructed of a plastic material, they have high electrical insulating property and generate static electricity upon friction or peeling. Therefore, also when a surface protecting film is peeled from an optical member, static electricity is generated. In addition, static electricity is a great problem in a step of manufacturing a liquid crystal display or a touch panel. Due to this static electricity, there arises a problem that a dust is attached to a surface protecting film or an optical member, and this pollutes an optical member. A disadvantage such as occurrence of electrostatic breakage at a surrounding circuit element occurs, producing abnormal display due to disturbance of a liquid crystal orientation. Then, in order to prevent such the disadvantage, a surface protecting film is subjected to various antistatic treatments.

Previously, as an attempt to suppress the aforementioned electrification of static electricity, for example, a surface protecting film in which an antistatic layer is disposed on one side of a plastic film has been disclosed (for example, see Patent Publication 1). However, in this surface protecting film, since electrification preventing treatment is performed on a support side, electrification prevention of a surface protecting film side can be performed, but electrification prevention of a subject to be protected can not be performed, and there is a problem that, when a surface protecting film is peeled from a subject to be protected, a subject to be protected is electrified.

In addition, a method of preventing electrification by adding a low-molecular surfactant to a pressure-sensitive adhesive, and transferring a surfactant from a pressure-sensitive adhesive to an adherend has been disclosed (for example, see Patent Publication 2). However, the low-molecular surfactant is easily bled on a surface of a pressure-sensitive adhesive layer and, when applied to a surface protecting film, staining of an adherend (subject to be protected) is feared. Therefore, when a pressure-sensitive adhesive with a low-molecular surfactant added thereto is applied to a surface protecting film for the technical fields related to optical appliances or electronic appliances, there is a problem that optical property of an optical member is deteriorated.

In addition, pressure-sensitive adhesive sheets in which an antistatic agent is contained in a pressure-sensitive adhesive layer (e.g. see Patent Reference 3) are disclosed. In such pressure-sensitive adhesive sheets, an exemplified alkali metal salt is blended at 0 1 to 5 parts by weight relative to 100 parts by weight of an acryl-based polymer, and they have a problem that, when these pressure-sensitive adhesive compositions are applied to a surface protecting film, staining on an optical member occurs by treatment with time or under a high temperature, therefore, it can not be said yet that they are sufficient.

As described above, in any of these, the aforementioned problems can not be solved well-balanced yet and, in the technical field associated with electronic appliances where electrification or staining becomes a particularly serious problem, it is difficult to correspond to demand of further improvement of an antistatic surface protecting film.

[Patent Publication 1] JP-A No. 11-256116
[Patent Publication 2] JP-A No.9-165460
[Patent Publication 3] JP-A No.6-128539

US 5,433,892 A describes an acrylate-based polymer containing, as a main component, an acrylate-based monomer having an alkyl group of a carbon number of 4 to 12 carbon atoms, a polyether polyol compound and an alkali metal salt.

In light of the aforementioned circumstances, an object of the present invention is to provide an antistatic pressure-sensitive adhesive composition which reduces staining on an adherend (subject to be protected) when applied to a surface protecting film such as a plastic product, and prevents electrification on an adherend (subject to be protected) which has not been electrification-prevented upon peeling of a surface protecting film, and antistatic pressure-sensitive adhesive sheets and a surface protecting film (a protecting film) using the same.

This object could be achieved on the basis of the finding that, by using a (meth)acryl-based polymer comprising, as a main component, a (meth)acryl-based monomer having an alkyl group of a carbon number of 6 to 14, and having an acid value of 1.0 or lower, an antistatic pressure-sensitive adhesive composition which prevents electrification on an adherend (subject to be protected) which has not been electrification-prevented upon peeling, and has reduced staining on an adherend (subject to be protected), is obtained.

That is, a pressure-sensitive adhesive composition of the present invention is a pressure-sensitive adhesive composition comprising a (meth)acryl-based polymer comprising, as a main component, a (meth)acryl-based monomer having an alkyl group of a carbon number of 6 to 14, and a polyether polyol compound, and an alkali metal salt, wherein an acid value of the (meth)acryl-based polymer is 1.0 or lower, and the alkali metal is contained at an amount of less than 0.1 part by weight relative to 100 parts by weight of the (meth)acryl-based polymer.

The (meth)acryl-based polymer in the present invention refers to an acryl-based polymer and/or a methacryl-based polymer. And the (meth)acryl-based monomer in the present invention refers to an acryl-based monomer and/or a methacryl-based monomer. Also, the (meth)acrylate in the present invention refers to an acrylate and/or a methacrylate.

According to the pressure-sensitive adhesive composition of the present invention, as shown by results of Examples, by using a pressure-sensitive adhesive composition comprising a (meth)acryl-based polymer comprising, as a main component, a (meth)acryl-based monomer having an alkyl group of a carbon number of 6 to 14, and having an acid value of 1.0 or lower, electrification on an adherend (subject to be protected) which has not been electrification-prevented is prevented upon peeling, and staining on an adherend (subject to be protected) is reduced. Although details of the reason why the surface protecting film manifests such properties are not clear, it is presumed that use of a (meth) acryl-based polymer comprising, as a main component, a (meth)acryl-based monomer having an alkyl group of a carbon number of 6 to 14, and having an acid value of 1.0 or lower, contributes to compatibility with an alkali metal salt and a polyether polyol compound, and well-balanced interaction such as conductivity, thereby, both of suppression of staining on the subject to be protected, and electrification property can be realized.

The pressure-sensitive adhesive composition of the present invention is characterized in that a (meth)acryl-based polymer comprising, as a main component, a (meth)acryl-based monomer having an alkyl group of a carbon number of 6 to 14 is used. By using such the (meth)acryl-based polymer, even when a blending amount of an alkali metal salt is less than 0.1 part by weight, excellent electrification performance is obtained, and staining on an adherend (subject to be protected) can be reduced.

In addition, the pressure-sensitive adhesive composition in the present invention is characterized in that a (meth)acryl-based polymer having an acid value of 1.0 or lower is used. An acid value of a (meth)acryl-based polymer in the present invention refers to a mg number of potassium hydroxide necessary for neutralizing a free fatty acid and a resin acid contained in 1g of a sample. It is presumed that, by the presence of many carboxyl groups and sulfonate groups having great interaction with an alkali metal salt in a (meth)acryl-based polymer skeleton, ion conduction is prevented, and excellent ability of preventing electrification on an adherend (subject to be protected) is not obtained. Therefore, in the present invention, it is necessary to use a (meth)acryl-based polymer not substantially containing acrylate and/or methacrylate having a carboxyl group and/or a sulfonate group as a constituent unit, and it is necessary that an acid value which is an index of an amount of such the functional group is 1.0 or lower. In a (meth)acryl-based polymer having an acid value exceeding 1.0, excellent ability of preventing electrification on an adherend (subject to be protected) is not obtained in some cases.

In the present invention, for exerting action as a pressure-sensitive adhesive composition, at least a (meth) acryl-based polymer containing, as a main component, a (meth)acryl-based monomer having an alkyl group of a carbon number of 6 to 14, a polyether polyol compound, an alkali metal salt, and a vinyl monomer having a functional group are essential features.

The present invention is characterized in that an alkali metal salt is contained. By using an alkali metal salt to obtain compatibility and well-balanced interaction with a (meth) acryl-based polymer, a surface protecting film which prevents electrification on an adherend (subject to be protected) which has not been electrification-prevented upon peeling can be obtained.

In addition, the present invention is characterized in that a content of an alkali metal salt in the pressure-sensitive adhesive composition is less than 0.1 part by weight relative to 100 parts by weight of the (met)acryl- based polymer. By a content of an alkali metal salt of less than 0.1 part by weight, a surface protecting film which reduces staining on an adherend (subject to be protected) due to an alkali metal salt can be obtained.

Examples of an alkali metal salt which is used in the foregoing include a metal salt comprising lithium, sodium, or potassium and, among them, a lithium salt having high dissociating property is preferable.

In addition, the present invention is characterized in that a polyether polyol compound is contained. By using a polyether polyol compound to obtain compatibility and well-balanced interaction with an alkali metal salt, and a (meth) acryl-based polymer, a surface protecting film which prevents electrification on an adherend (subject to be protected) which has not been electrification-prevented upon peeling, and reduces staining on an adherend (subject to be protected) can be obtained.

In addition, the present invention is characterized in that a (meth) acryl-based polymer further comprising a (meth) acryl-based monomer having a hydroxyl group as a constituent component is used. By using a (meth) acryl-based monomer having a hydroxyl group, crosslinking of a pressure-sensitive adhesive composition is easily controlled and, consequently, balance between improvement in wettability due to fluidity and reduction in an adhesive strength on peeling is easily controlled. Further, since a hydroxyl group has appropriate interaction with an alkali metal salt and a polyether polyol compound unlike the aforementioned carboxyl group and sulfonate group which can generally act as a crosslinking site, the present invention can be also suitably used in a respect of electrification preventing property.

On the other hand, a pressure-sensitive adhesive layer of the present invention is characterized in that the aforementioned pressure-sensitive adhesive composition is crosslinked. By performing crosslinking by appropriately regulating a constitutional unit and a constitutional ratio of a (meth) acryl-based polymer, selection of a crosslinking agent, and an addition ratio, a surface protecting film more excellent in heat resistance can be obtained.

Among them, as a crosslinking agent, a modified isocyanurate of isocyanate in which isocyanate is isocyanate-modified such as hexamethylene diisocyante and tolylene diisocyanate is preferably used. By using an modified isocyanurate of isocyanate, it becomes easy to control balance between a pressure-sensitive adhering force and peeling electrification voltage property.

In addition, a pressure-sensitive adhesive sheet is characterized in that the film has a pressure-sensitive adhesive sheet, which is formed by crosslinking a pressure-sensitive adhesive composition as defined above on one side or both sides of a support. According to the pressure-sensitive adhesive sheet of the present invention, since the pressure-sensitive adhesive composition of the present invention exerting the aforementioned action and effect is used, electrification of a pressure-sensitive adhesive sheet can be prevented upon peeling, and a pressure-sensitive adhesive sheet which can reduce staining property on an adherend (subject to be protected) can be obtained. For this reason, in particular, those sheets are very useful as an antistatic pressure-sensitive adhesive sheet in the technical field associated with an electron appliances in which electrification of static electricity and staining are a particularly serious problem.

Further, when the pressure-sensitive adhesive composition of the present invention is applied to a surface protecting film, it is more preferable that a plastic substrate used in a surface protecting film is antistatic-treated. By antistatic-treating a plastic substrate, a peeling electrification voltage on an adherend (subject to be protected) can be reduced more effectively, and further excellent electrification preventing ability is obtained. Examples of electrification preventing treatment include a method of coating an antistatic resin consisting of an antistatic agent and a resin component or an electrically conducting resin containing an electrically conducting polymer or an electrically conducting substance, and a method of depositing or plating an electrically conducting substance. According to the surface protecting film of the present invention, since the pressure-sensitive adhesive composition of the present invention exerting the aforementioned action and effect is used, electrification of a surface protecting film can be prevented upon peeling, and a surface protecting film which can reduce staining property on an adherend (subject to be protected) can be obtained. For this reason, in particular, those films are very useful as an antistatic surface protecting film in the technical field associated with an electron appliances in which electrification of static electricity and staining are a particularly serious problem.

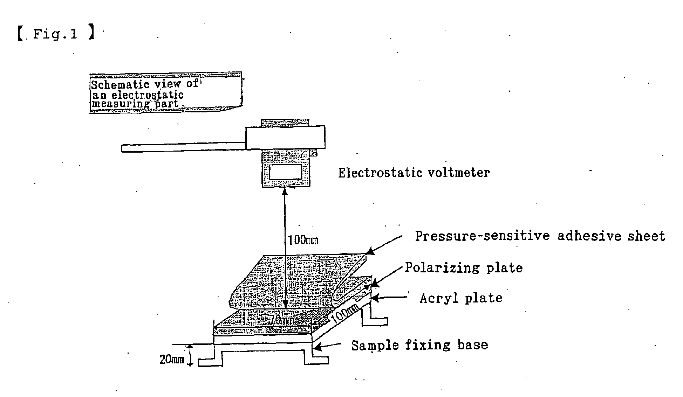

Fig. 1 is a schematic construction view of an electrostatic measuring part used for measuring a peeling electrification voltage in Example.

Embodiments of the present invention will be explained in detail below.

That is, a pressure-sensitive adhesive composition of the present invention is a pressure-sensitive adhesive composition comprising a (meth)acryl-based polymer comprising, as a main component, a (meth)acryl-based monomer having an alkyl group of a carbon number of 6 to 14, and a polyether polyol compound, and an alkali metal salt, wherein an acid value of the (meth)acryl-based polymer is 1.0 or lower, and the alkali metal is contained at an amount of less than 0.1 part by weight relative to 100 parts by weight of the (meth)acryl-based polymer.

A (meth)acryl-based polymer used in the present invention is not particularly limited as far as it is a (meth)acryl-based polymer having pressure-sensitive adhering property corresponding to the aforementioned property.

In the present invention, a (meth)acryl-based monomer having an alkyl group of a carbon number of 6 to 14 can be used, and it is more preferable to use a (meth)acryl-based monomer having an alkyl group of a carbon number of 7 to 13. Examples of (meth)acrylate having an alkyl group of a carbon number of 6 to 14 include hexyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, n-tridecyl (meth)acrylate, and n-tetradecyl (meth)acrylate. Among them, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, and n-tridecyl (meth)acrylate are preferable to use for the present invention.

As other polymerizable monomer other than a (meth)acryl-based monomer having an alkyl group of a carbon number of 6 to 14, a polymerizable monomer for regulating a glass transition point or peelability of a (meth)acryl-based polymer can be used in such a range that the effect of the present invention is not deteriorated. In addition, in the present invention, (meth)acryl-based monomers having an alkyl group of a carbon number of 6 to 14 may be used alone, or two or more kinds may be used by mixing, and a content as a whole is preferably 0 to 50% by weight in a monomer component of a (meth)acryl-based polymer.

As other polymerizable monomer which is used in a (meth) acryl-based polymer, components other than acrylate and/or methacrylate having a carboxyl group or a sulfonate group can be used without any limitation. Among them, in particular, since control of crosslinking can be easily conducted, acrylate and/or methacrylate having a hydroxyl group are more preferably used.

In the present invention, an acid value of the (meth)acryl-based polymer is preferably 1.0 or less, more preferably 0.8 or less, further preferably 0.6 or less. In particular, for example, by adjusting acrylic acid at 0.13 or less parts by weight relative to a total of 100 parts by weight of 2-ethylhexyl acrylate and acrylic acid, the aforementioned acid value can be satisfied.

In the present invention, the hydroxyl group-containing monomer can be optionally used. Examples of the hydroxyl group-containing monomer include 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl acrylate, N-methylol(meth)acrylamide, vinyl alcohol, allyl alcohol, 2-hydroxyethyl vinyl ether, 4-hydroxybutylvinyl ether, and diethylene glycol monovinyl ether.

In the case where the aforementioned (meth)acryl-based monomer having a hydroxyl group is contained, a (meth)acryl-based monomer having a hydroxyl group is preferably 0.1 to 10 parts by weight, more preferably 0.5 to 8 parts by weight relative to 100 parts by weight of a whole constituent unit of a (meth)acryl-based polymer.

Further, in the present invention, as an arbitrary component other than the aforementioned hydroxyl group-containing monomer, monomers having ability of improving a cohesive strength-heat resistance such as a cyano group-containing monomer such as acrylonitrile, vinyl esters such as vinyl acetate, and an aromatic vinyl compound such as styrene, and monomers having a functional group which improves an adhesive strength or serves as a crosslinking point, such as an amido group-containing monomer such as acrylamide and diethylacrylamide, an amino group-containing monomer such as N,N-dimethylaminoethyl (meth)acrylate, and N,N-dimethylaminopropyl (meth)acrylate, an epoxy group-containing monomer such as glycidyl (meth)acrylate, and allyl glycidyl ether, and N-acryloylmorpholine, and vinyl ethyl ether can be appropriately used. These compounds may be used alone, or two or more kinds may be used by mixing.

A (meth)acryl-based polymer used in the present invention has a weight average molecular weight of preferably 100,000 to 5,000,000, more preferably 200,000 to 4,000,000, further preferably 300,000 to 3,000,000. When a weight average molecular weight is smaller than 100000, since an adhesive strength at peeling is increased due to improvement in wettability on a polarizing plate, this becomes a cause for damage of a polarizing plate in some cases, and there is a tendency that an adhesive residue is generated due to a decreased cohesive strength of a pressure-sensitive adhesive composition. On the other hand, when a weight average molecular weight exceeds 5,000,000, there is a tendency that fluidity of a polymer is reduced, wetting on a polarizing plate becomes insufficient, and this becomes a cause for blister (swelling) generated between a polarizing plate and a pressure-sensitive adhesive composition layer of pressure-sensitive adhesive sheets (surface protecting films). A weight average molecular weight is obtained by measurement with GPC (gel permeation chromatography).

In addition, for the reason that pressure-sensitive adhering performance is easily balanced, it is desirable that a glass transition temperature (Tg) of the (meth)acryl-based polymer is 0°C or lower (usually -100°C or higher), preferably -10°C or lower. When a glass transition temperature is higher than 0°C, fluidity of a polymer is reduced, and wetting on a polymerizing plate becomes insufficient, and there is a tendency that this becomes a cause for blister generated between a polarizing plate and a pressure-sensitive adhesive composition layer of pressure-sensitive adhesive sheets. In addition, a glass transition temperature (Tg) of a (meth)acryl-based polymer can be adjusted in the aforementioned range by appropriating changing a monomer component and a composition ratio to be used.

The (meth)acryl-based polymer of the present invention is obtained by a polymerization method which is generally used as a procedure for synthesizing a (meth)acryl-based polymer such as solution polymerization, emulsion polymerization, bulk polymerization, and suspension polymerization. In addition, the resulting polymer may be any of a random copolymer, a block copolymer, and a graft copolymer.

The polyether polyol compound in the present invention is not particularly limited as far as it is a polymer polyol compound having an ether group, and the known polymer polyol compounds are used. In particular, examples of the polyether polyol compound include polyethylene glycol, polypropylene glycol (diol type), polypropylene glycol (triol type), polytetramethylene ether glycol, and the aforementioned derivative, and a random copolymer and a block copolymer of polyethylene glycol and polypropylene glycol such as a block copolymer of polypropylene glycol-polyethylene glycol-polypropylene glycol, a block copolymer of polypropylene glycol-polyethylene glycol, a block copolymer of polyethylene glycol-polypropylene glycol-polyethylene glycol, and a random copolymer of polypropylene glycol-polyethylene glycol.

A terminus of a glycol chain may remain a hydroxyl group, or may be substituted with an alkyl group or a phenyl group. These compounds may be used alone, or may be used by mixing two or more kinds of them.

As a molecular weight of the polyether polyol compound, a number average molecular weight of 10000 or less is suitably used. A number average molecular weight of 200 to 5000 is more suitably used. When a number average molecular weight exceeds 10000, there is a tendency that staining on an adherend (subject to be protected) is deteriorated. A number average molecular weight is obtained by measuring by GPC (gel permeation chromatography).

A blending amount of the polyether polyol compound is preferably 1 to 50 parts by weight, more preferably 3 to 20 parts by weight relative to 100 parts by weight of a (meth)acryl-based polymer. When the amount exceeds 50 parts by weight, bleeding to an adherend (subject to be protected) is increased, and there is a tendency that a pressure-sensitive adhering force is reduced, being not preferable.

Examples of an alkali metal salt used in the present invention include a metal salt comprising lithium, sodium, or potassium, and, specifically, a metal salt constructed of a cation consisting of $Li^+$, $Na^+$, or $K^+$, and an anion consisting of $Cl^-$, $Br^-$, $I^-$, $BF_4^-$, $PF_6^-$, $SCN^-$, $ClO_4^-$, $CF_3SO_3^-$, $(CF_3SO_2)_2N^-$, $(C_2F_5SO_2)_2N^-$, or $(CF_3SO_2)_3C^-$ is preferably used. Among them, a lithium salt such as $LiBr$, $LiI$, $LiBF_4$, $LiPF_6$, $LiSCN$, $LiClO_4$, $LiCF_3SO_3$, $Li(CFaSO_2)_2N$, $Li(C_2F_5SO_2)_2N$, and $Li(CF_3SO_2)_3C$ is preferably used. These alkali metal salts may be used alone, or two or more kinds may be used by mixing.

Regarding a blending amount of an alkali metal salt used in the pressure-sensitive adhesive composition, an alkali metal salt is preferably blended at an amount of less than 0.1 part by weight, more preferably 0.01 to 0.09 parts by weight relative to 100 parts by weight of a (meth)acryl-based polymer, further preferably 0.05 to 0.08 parts by weight relative to 100 parts by weight of a (meth)acryl-based polymer. When a blending amount is less than 0.01 part by weight, sufficient electrification property is not obtained in some cases. On the other hand, when a blending amount is more than 0.1 part by weight, there is a tendency that staining on an adherend (subject to be protected) is increased, which is not preferable.

In the pressure-sensitive adhesive composition of the present invention, pressure-sensitive adhesive sheets further excellent in heat resistance are obtained by appropriately crosslinking a (meth)acryl-based polymer. As a crosslinking agent used in the present invention, an isocyanate compound, an epoxy compound, a melamine-based resin, an aziridine derivative, and a metal chelate compound are used. Among them, mainly from a viewpoint of obtaining an appropriate cohesive strength, an isocyanate compound and an epoxy compound are particularly preferably used. These crosslinking agents may be used alone, or two or more kinds may be used by mixing.

Among them, examples of the isocyanate compound include aromatic isocyanate such as tolylene diisocyanate, and xylene diisocyanate, alicyclic isocyanate such as isophorone diisocyanate and aliphatic isocyanate such as hexamethylene diisocyanate.

More specific examples of the isocyanate compound include lower aliphatic polyisocyanates such as butylene diisocyanate, and hexamethylene diisocyanate, alicyclic isocyanates such as cyclopentylene diisocyanate, cyclohexylene diisocyanate, and isophorone diisocyanate, aromatic diisocyanates such as 2,4-tolylene diisocyanate, 4,4'-diphenylmethane diisocyanate, and xylene diisocyanate, and isocyanate adducts such as trimethylolpropane/tolylene diisocyanate trimer adduct (trade name: Coronate L manufactured by Nippon Polyurethane Industry Co., Ltd.), trimethylolpropane/hexamethylene diisocyanate trimer adduct (trade name: Coronate HL manufactured by Nippon Polyurethane Industry Co., Ltd.), and isocyanurate entity of hexamethylene diisocyanate (trade name: Coronate HX manufactured by Nippon Polyurethane Industry Co., Ltd.). These isocyanate compounds may be used alone, or may be used by mixing two or kinds of them.

Among the aforementioned diisocyanate compounds, from a viewpoint of control of balance between a pressure-sensitive adhering force and peeling electrification voltage property, preferable examples include a modified isocyanurate of isocyanate (trade named: Coronate HX, manufactured by Nippon Polyurethane Industry Co., Ltd.), and a modified isocyanurate of isocyante in which tolylene diisocyanate is isocyanate-modified (trade name Coronate 2030, manufactured by Nippon Polyurethane Industry Co., Ltd.)

Examples of the epoxy compound include N,N,N',N'-tetraglycidyl-m-xylenediamine (trade name TETRAD-X manufactured by Mitsubishi Gas Chemical Company, Inc.) and 1,3-bis(N,N-diglycidylaminomethyl)cyclohexane (trade name TETRAD-C manufactured by Mitsubishi Gas Chemical Company Inc.). These compounds may be used alone, or may be used by mixing two or more kinds.

Examples of the melamine-based resin include hexamethylolmelamine.

Examples of the aziridine derivative include trade name HDU, trade name TAZM, and trade name TAZO (all manufactured by Sogo Pharmaceutical Co., Ltd.) as a commercially available product. These compounds may be used alone, or may be used by mixing two or more kinds.

Examples of the metal chelate compound include aluminum, iron, tin, titanium, nickel, and so on as metal components, and acetylene, methyl acetoacetic acid, ethyl lactic acid, and so on, as chelate components. These compounds may be used alone, or may be used by mixing two or more kinds.

An amount of these crosslinking agents to be used depends on balance between a (meth)acryl-based polymer to be crosslinked, and is appropriately selected depending on utility as a pressure-sensitive adhesive sheet. In order to obtain sufficient heat resistance due to a cohesive strength of an acryl pressure-sensitive adhesive, generally, the crosslinking agent is contained preferably at 0.01 to 15 parts by weight, more preferably 0.5 to 10 parts by weight relative to 100 parts by weight of the (meth)acryl-based polymer. When a content is less than 0.01 part by weight, crosslinking formation due to a crosslinking agent becomes insufficient, a cohesive strength of a pressure-sensitive adhesive composition becomes small, and sufficient heat resistance is not obtained in some cases, and there is a tendency that it becomes cause for an adhesive residue. On the other hand, when a content exceeds 15 parts by weight, a cohesive strength of a polymer is great, fluidity is reduced, and wetting on an adherend (subject to be protected) becomes insufficient, and there is a tendency that this becomes cause for peeling off. These crosslinking agents may be used alone, or may be used by mixing two or more kinds.

Alternatively, a polyfunctional monomer containing two or more radiation-reactive unsaturated bonds as a substantial crosslinking agent is added, and this may be crosslinked with radiation.

As the polyfunctional monomer having two or more radiation-reactive unsaturated bonds, a polyfunctional monomer component having two or more of one kind or two or more kinds radiation-reactive groups which can be crosslinking-treated (cured) by irradiation of radiation, such as a vinyl group, an acryloyl group, a methacryloyl group, and a vinylbenzyl group is used. Generally, a component having 10 or less of radiation-reactive unsaturated bonds is suitably used. Two or more kinds of the polyfunctional monomer may be used jointly.

Examples of the polyfunctinal monomer include ethylene glycol di(meth)acrylate, diethlene glycol di(meth)acrylate, tetraethylene glycol di(meth)acrylate, neopentyl glycol di(meth)acrylate, 1,6-hexanediol di(meth)acrylate, trimethylolpropane tri(meth)acrylate, pentaerythritol tri(meth)acrylate, dipentaerythritol hexa(meth)acrylate, divinylbenzene, and N,N'-methylenebisacrylamide.

An amount of the polyfunctinoal monomer to be used depends on balance between a (meth)acryl-based polymer to be crosslinked, and is appropriately selected depending on utility as a pressure-sensitive adhesive sheet. In order to obtain sufficient heat resistance due to a cohesive strength of an acryl pressure-sensitive adhesive, generally, the monomer is preferably blended at 0.1 to 30 parts by weight relative to 100 parts by weight of a (meth)acryl-based polymer. From a viewpoint of flexibility and tackiness, the monomer is preferably blended at 10 parts by weight or less relative to 100 parts by weight of a (meth)acryl-based polymer.

Examples of radiation include ultraviolet ray, laser ray, $\alpha$ ray, $\beta$ ray, $\gamma$ ray, X-ray, and electron beam. From a viewpoint of controlling property and better handling property and a cost, ultraviolet ray is suitably used. More preferably, ultraviolet ray having a wavelength of 200 to 400nm is used. Ultraviolet ray can be irradiated using an appropriate light source such as a high pressure mercury lamp, a micro-wave excitation-type lamp, and a chemical lamp. When ultraviolet ray is used as irradiation, a photopolymerization initiator is added to an acryl pressure-sensitive adhesive layer.

The photopolymerization initiator depends on a kind of a radiation-reactive component, and may be a substance which produces a radical or a cation by irradiating ultraviolet ray having an appropriately wavelength which can trigger the polymerization reaction.

Example of the photoradical polymerization initiator include benzoins such as benzoin, benzoin methyl ether, benzoin ethyl ether, methyl o-benzoylbenzoate-p-benzoin ethyl ether, benzoin isopropyl ether, and $\alpha$-methylbenzoin, acetophenes such as benzylmethylketal, trichloroacetophenone, 2,2-diethoxyacetophenone, and 1-hydroxycyclohexyl phenyl ketone, propiophenones such as 2-hydroxy-2-methylpropiophenone, and 2-hydroxy-4'-isopropyl-2-methylpropiophenone, benzophenones such as benzophenone, methylbenzophenone, p-chlorobenzophenone, and p-dimethylaminobenzophenone, thioxanthons such as 2-chlorothioxanthon, 2-ethylthioxanthon, and 2-isopropylthioxanthon, acylphosphine oxides such as bis(2,4,6-trimethylbenzoyl)-phenylphosphine oxide, 2,4,6-trimethylbenzoyldiphenylphosphine oxide, and (2,4,6-trimethylbenzoyl)-(ethoxy)-phenylphosphine oxide, benzil, dibenzsuberone, and $\alpha$-acyloxime ether.

Examples of a photocation polymerization initiator include onium salts such as an aromatic diazonium salt, an aromatic iodonium salt, and an aromatic sulfonium salt, organometallic complexes such as an ion-allene complex, a titanocene complex, and an aryl silanol-aluminum complex, nitrobenzyl ester, sulfonic acid derivative, phosphoric acid ester, phenolsulfonic acid ester, diazonaphthoquinone, and N-hydroxymidosulfonate. Two or more kinds of the photopolymerization initiators may be used jointly.

It is preferable that the photopolymerization initiator is blended usually in a range of 0.1 to 10 parts by weight, preferably 0.2 to 7 parts by weight relative to 100 parts by weight of a (meth)acryl-based polymer.

Further, it is also possible to use a photoinitiation polymerization assistant such as amines. Examples of the photoinitiation assistant include 2-dimethylaminoethyl benzoate, diemethylaminoacetophenone, p-dimethylaminobenzoic acid ethyl ester, and p-dimethylaminobenzoic acid isoamyl ester. Two or more kinds of the photopolymerization initiation assistants may be used. It is preferably that the polymerization initiation assistant is blended at 0.05 to 10 parts by weight, further 0.1 to 7 parts by weight relative to 100 parts by weight a (meth)acryl-based polymer.

Further, the previously known tackifiers, or the previously known various additives such as a colorant, a surfactant, an elasticizer, low molecular polymer, a surface lubricant agent, a leveling agent, an antioxidant, a corrosion preventing agent, a photo stabilizer, an ultraviolet absorbing agent, a polymerization inhibitor, a silane coupling agent, and a powder, a particle, and a foil of inorganic or organic filler, metal powder and pigment may be appropriately added to the pressure-sensitive adhesive composition used in the pressure-sensitive adhesive sheet of the present invention depending on utility.

Meanwhile, the pressure-sensitive adhesive layer in the present invention is such that the aforementioned pressure-sensitive adhesive composition is crosslinked. In addition, pressure-sensitive adhesive sheets of the present invention is such that such the pressure-sensitive adhesive layer is formed on a supporting film (support). Thereupon, crossslinking of the pressure-sensitive adhesive composition is generally performed after coating of the pressure-sensitive adhesive composition, and a pressure-sensitive adhesive layer after crosslinking may be also transferred onto a supporting film (support).

When a photopolymerization initiator as an arbitrary component is added as described above, a pressure-sensitive adhesive layer can be obtained by coating the pressure-sensitive adhesive composition directly on a subject to be protected, or coating on one side or both sides of a supporting substrate (support), and performing light irradiation. Usually, a pressure-sensitive adhesive layer is used by photopolymerization by irradiating with ultraviolet ray having an irradiance of 1 to 200mW/cm$^2$ at a wavelength of 300 to 400nm, at an expose dose of around 200 to 4000mJ/cm$^2$.

A method of forming a pressure-sensitive adhesive layer on a film (support) is not particularly limited, but for example, a layer is prepared by coating the aforementioned pressure-sensitive adhesive composition on a supporting film, and drying this to remove a polymerization solvent to form a pressure-sensitive adhesive layer on a supporting film (support). Thereafter, aging may be performed for the purpose of adjusting transference of a component of a pressure-sensitive adhesive layer or adjusting a crosslinking reaction. Alternatively, when pressure-sensitive adhesive sheets are prepared by coating a pressure-sensitive adhesive composition on a supporting film, one or more kinds of solvents other than a polymerization solvent may be newly added to the composition so that the composition can be uniformly coated on a supporting film.

A surface protecting film of the present invention is characterized in that the pressure-sensitive adhesive composition is crosslinked. By performing crosslinking by appropriately regulating a constitutional unit and a constitutional ratio of a (meth) acryl-based polymer, selection of a crosslinking agent, and an addition ratio, a surface protecting film more excellent in heat resistance can be obtained.

Pressure-sensitive adhesive sheets of the present invention are such that the aforementioned pressure-sensitive adhesive layer is coated on one side or both sides of various supports comprising a plastic film such as a polyester film, or a porous material such as a paper and a non-woven fabric at a thickness of usually 3 to 100μm, preferably around 5 to 50μm, to form an aspect of a sheet or a tape.

A support film (support) constituting a surface protecting film is preferably a resin film having heat resistance and solvent resistance and, at the same time, having flexibility. By the support film having flexibility, a pressure-sensitive adhesive composition can be coated by a roll coater and can be wound in a roll-like.

Examples of a resin forming the support film (support) include polyethylene terephthalate, polyester, polyethylene, polypropylene, polystyrene, polyimide, polyvinyl alcohol, polyvinyl chloride, fluorine-containing resin such as polyfluoroethylene, nylon, and cellulose.

In addition, in order to improve adhesion between a pressure-sensitive adhesive layer and a support film (support), a surface of a support film may be corona-treated. Alternatively, the backside of a support film may be surface-treated.

The surface protecting film obtained by the present invention is useful in a masking tape or a re-peeling type label. In particular, the surface protecting film of the present invention is useful as a surface protecting film for an optical member in which a surface was Anti-Glare-treated irregularly, and electrification preventing property on an adherend (subject to be protected), and effect of reducing staining on an adherend (subject to be protected) act advantageously.

In the present invention, as a support, a plastic substrate is suitably used. A plastic substrate is not particularly limited as far as it can be formed into a sheet shape or a film-shape, and examples include polyolefin films such as polyethylene, polypropylene, poly-1-butene, poly-4-methyl-1-pentene, ethylene-propylene copolymer, ethylene-1-butene copolymer, ethylene-vinyl acetate copolymer, ethylene-ethyl acrylate copolymer, and ethylene-vinyl alcohol copolymer, polyester films such as polyethylene terephthalate, polyethylene naphthalate, and polybutylene terephthalate, polyacrylate films, polystyrene films, polyamide films such as nylon 6, nylon 6,6, and partially aromatic polyamide, polyvinyl chloride films, polyvinylidene chloride films, and polycarbonate films.

A thickness of the aforementioned film is usually 5 to 200 μm, preferably around 10 to 100 μm. The surface of the support in contact with a pressure-sensitive adhesive layer may be subjected to releasing, anti-staining or acid treatment with silicone, fluorine, long chain acryl-based or fatty acid amide-based releasing agent, or a silica powder, easy adhesion treatment such as acid treatment, alkali treatment, primer treatment, corona treatment, plasma treatment, and ultraviolet ray treatment, or coating-type, kneading-type, or deposition-type antistatic treatment, if necessary.

A surface protecting films of the present invention are such that the aforementioned pressure-sensitive adhesive layer is coated on one side or both sides of various supports comprising a plastic film such as a polyester film, or a porous material such as a paper and a non-woven fabric at a thickness of usually 3 to 100μm, preferably around 5 to 50μm. In addition, as a method of forming the pressure-sensitive adhesive layer of the present invention, the known method used for preparing pressure-sensitive adhesive sheets is used. Specifically, examples include roll coating, gravure coating, reverse coating, roll brushing, spray coating, and air knife coating methods, immersing, and curtain coating method, and extruding coating method with a die coater.

In the surface protecting films of the present invention, a separator (or peeling liner, and peeling sheet.) can be applied on a pressure-sensitive adhesive surface for the purpose of protecting a pressure-sensitive adhesive surface, if necessary. As a substrate constituting a separator, there are a paper and a plastic film, and a plastic film is suitably used from a viewpoint of excellent surface smoothness. The film is not particularly limited as far as it is a film which can protect the pressure-sensitive adhesive layer, and examples include a polyolefin film such as polyethylene, polypropylene, poly-1-butene, and poly-4-methyl-1-pentene, a polybutadiene film, a polymethylpentene film, an ethylene-propylene copolymer, an ethylene- 1-butene copolymer, an ethylene-vinyl acetate copolymer, an ethylene-ethyl acrylate copolymer, and an ethylene-vinyl alcohol copolymer, a polyester film such as polyethylene terephthalate, polyethylene naphthalate, and polybutylene terephthalate, a polyacrylate film, a polyurethane film, a polystyrene film, a polyamide film such as nylon 6, nylon 6,6, and partially aromatic polyamide, a polyvinyl chloride film, a vinyl chloride copolymer film, a polyvinylidene chloride film, and a polycarbonate film.

A thickness of the film is usually around 5 to 200μm, preferably around 10 to 100μm. A pressure-sensitive adhesive layer applying surface of the film can be appropriately subjected to treatment with a releasing agent such as a silicone-based, fluorine-based, long chain acryl-based or fatty acid amide-based releasing agent, or a silica powder, or coating-type, kneading-type, or deposition-type antistatic treatment, if necessary.

In addition, it is more preferably that a plastic substrate used in the surface protecting film of the present invention is electrification preventing-treated.

Antistatic treatment which is performed on a plastic substrate is not particularly limited, but for example, a method of providing an electrification preventing layer on at least one side of a generally used film, or a method of kneading a kneading-type electrification preventing agent into a plastic film is used.

Examples of a method of providing an electrification preventing layer on at least one side of a film include a method of coating an electrification preventing resin comprising an electrification preventing agent and a resin component, or an electrically conductive resin containing an electrically conductive polymer or an electrically conductive substance, and a method of depositing or plating an electrically conductive substance.

Examples of an electrification preventing agent contained in an electrification preventing resin include a cation-type electrification preventing agent having a cationic functional group such as a quaternary ammonium salt, a pyridinium salt, and a primary, secondary or tertiary amino group, an anion-type electrification preventing agent having an anionic functional group such as a sulfonic acid salt, a sulfuric acid ester salt, a phosphonic acid salt, and a phosphoric ester salt, an amphoteric-type electrification preventing agent such as alkylbetain and a derivative thereof, imidazoline and a derivative thereof, and alanine and a derivative thereof, a nonion-type electrification preventing agent such as glycerin and a derivative thereof, and polyethylene glycol and a derivative thereof, and an ionic electrically conductive polymer obtained by polymerizing or copolymerizing a monomer having the aforementioned cation-type, anion-type, or amphoteric-type ionic electrically conductive group. These compounds may be used alone, or two or more of them may be used by mixing.

Specifically, examples of the cation-type electrification preventing agent include a (meth)acrylate copolymer having a quaternary ammonium group such as an alkyl trimethylammmonium salt, acyloylamidopropyltrimethtylammonium methosulfate, an alkylbenzylmethylammonium salt, acyl choline chloride, and polydimethylaminoethyl methacrylate, a styrene copolymer having a quaternary ammonium group such as polyvinylbenzyltrimethylammonium chloride, and a diallylamine copolymer having a quaternary ammonium group such as polydiallyldimethylammonium chloride. The compounds may be used alone, or two or more kinds may be used by mixing.

Examples of the anion-type electrification preventing agent include an alkyl sulfonic acid salt, an alkylbenzenesulfonic acid salt, an alkyl sulfate ester salt, an alkyl ethoxy sulfate ester salt, an alkyl phosphate ester salt, and a sulfonic acid group-containing styrene copolymer. These compounds may be used alone, or two or more kinds may be used by mixing.

Examples of the amphoteric-type electrification preventing agent include alkylbetain, alkylimidazoliumbetain, and carbobetaingrafted copolymer. These compounds may be used alone, or two or more kinds may be used by mixing.

Examples of the nonion-type electrification preventing agent include fatty acid alkylolamide, di(2-hydroxyethyl) alkylamine, polyoxyethylenealkylamine, fatty acid glycerin ester, polyoxyethylene glycol fatty acid ester, sorbitan fatty acid ester, polyoxysorbitan fatty acid ester, polyoxyethylene alkyl phenyl ether, polyoxyethylene alkyl ether, polyethylene glycol, polyoxyethylenediamine, a copolymer consisting of polyether, polyester and polyamide, and methoxypolyethyleneglycol (meth)acrylate. These compounds may be used alone, or two or more kinds may be used by mixing.

Examples of the electrically conductive polymer include polyaniline, polypyrrole and polythiophene. These electrically conductive polymers may be used alone, or two or more kinds may be used by mixing.

Examples of the electrically conductive substance include tin oxide, antimony oxide, indium oxide, cadmium oxide, titanium oxide, zinc oxide, indium, tin, antimony, gold, silver, copper, aluminum, nickel, chromium, titanium, iron, covert, copper iodide, and an alloy and a mixture thereof. These electrically conductive substances may be used alone, or two or more kinds may be used by mixing.

As a resin component used in the electrification preventing resin and the electrically conductive resin, a generally used resin such as polyester, acryl, polyvinyl, urethane, melanine and epoxy is used. In the case of a polymer-type electrification preventing agent, it is not necessary that a resin component is contained. In addition, the electrification preventing resin component may contain compounds of a methylolated or alkylolated melanine series, a urea series, a glyoxal series, and an acrylamide series, an epoxy compound, or an isocyanate compound as a crosslinking agent.

An electrification preventing layer is formed, for example, by diluting the aforementioned electrification preventing resin, electrically conductive polymer or electrically conductive resin with a solvent such as an organic solvent and water, and coating this coating solution on a plastic film, followed by drying.

Examples of an organic solvent used in formation of the electrification preventing layer include methyl ethyl ketone, acetone, ethyl acetate, tetrahydrofuran, dioxane, cyclohexanone, n-hexane, toluene, xylene, methanol, ethanol, n-propanol and isopropanol. These solvents may be used alone, or two or more kinds may be used by mixing.

As a coating method in formation of the electrification preventing layer, the known coating method is appropriately used, and examples include roll coating, gravure coating, reverse coating, roll brushing, spray coating, and air knife coating methods, an immersing and curtain coating method, and an extrusion coating method with a die coater.

A thickness of the aforementioned electrification preventing resin layer, electrically conductive polymer or electrically conductive resin is usually 0.01 to 5 $\mu$m, preferably around 0.03 to 1 $\mu$m**.**

Examples of a method of depositing or plating an electrically conductive substance include vacuum deposition, sputtering, ion plating, chemical deposition, spray pyrolysis, chemical plating, and electric plating methods.

A thickness of the electrically conductive substance is usually 2 to 1000 nm (20 to 10000Å), preferably 5 to 500 nm (50 to 5000Å).

As the kneading-type electrification preventing agent, the aforementioned electrification preventing agent is appropriately used.

An amount of the kneading-type electrification preventing agent to be blended is 20% by weight or less, preferably in a range of 0.05 to 10% by weight relative to a total weight of a plastic film. A kneading method is not particularly limited as far as it is a method by which the electrification preventing agent can be uniformly mixed into a resin used in a plastic film, but for example, a heating roll, a Banbury mixer, a pressure kneader, and a biaxial kneading machine are used.

The surface protecting film of the present invention is used, particularly, in plastic products in which static electricity is easily generated and, particularly, can be used as a surface protecting film used for the purpose of protecting a surface of an optical member such as a polarizing plate, a wavelength plate, a retardation plate, an optical compensating film, a reflecting sheet, and a brightness enhancement film which are used in a liquid crystal display.

EXAMPLES

Examples which specifically show a construction and effect of the present invention will be explained below. Assessment items in Examples were measured as follows:

<Measurement of molecular weight of an (meth)acryl-based polymer>

A molecular weight was measured using a GPC apparatus (HLC-8220GPC manufactured by Tosoh Corporation). Measuring conditions are as follows.

Sample concentration: 0.2wt% (THF solution)
Sample injection amount: 10$\mu$l
Eluent: THF
Flow rate: 0.6ml/min
Measuring temperature: 40°C
Column:
Sample column;
TSKguard column SuperHZ-H(1 column)+TSK gel Super HZM-H(2 columns)
Reference column;
TSK gel SuperH-RC(1 column)
Detector: Refractive index detector (RI)
A molecular weight was obtained in terms of polystyrene.

<Measurement of glass transition temperature Tg>

A glass transition temperature Tg(°C) was obtained by the following equation using the following reference values as a glass transition temperature Tgn(°C) of a homopolymer of each monomer.

## Equation :

$$1/(Tg+273)=\Sigma[W_n/(Tg_n+273)]$$

[wherein Tg (°C) represents a glass transition temperature of a copolymer, $W_n$ (-) represents a weight fraction of each monomer, $Tg_n$ (°C) represents a glass transition temperature of a homopolymer of each monomer, and n represents a kind of each monomer]

Reference values:
2-Ethylhexyl acrylate :-70°C
Isononyl acrylate :-82°C
Butyl acrylate :-55°C
Ethyl acrylate :-22°C
2-Hydroxyethyl acrylate:-15°C
Acrylic acid :106°C

Reference values were cited from the description in Synthesis-Design and New Utility Development of Acryl Resin" (published by publishing section of Chubu Keiei Kaihatsu Center).

<Measurement of acid value>

An acid value was measured using an automatically titrating apparatus (COM-550 manufactured by HIRANUMA SANGYO Co., Ltd.), and was obtained by the following equation.

$$A=\{(Y-X)\times f\times 5.611\}/M$$

A; Acid value
Y; Titration amount of sample solution (ml)
X; Titration amount of solution of only 50g of mixed solvent (ml)
f; Factor of titration solution
M; Weight of polymer sample (g)

Measurement conditions are as follows:

Sample solution: About 0.5g of a polymer sample was dissolved in 50g of a mixed solvent (toluene/2-propanol/distilled water= 50/49.5/0.5, weight ratio) to obtain a sample solution.
Titration solution: 0.1N 2-propanolic potassium hydroxide solution (for petroleum product neutralization value test manufactured by Wako Pure Chemical Industries, Ltd.)
Electrode: glass electrode; GE-101, comparative electrode; RE-201, Measurement mode: petroleum product neutralization value test 1

Examples will be explained below.

[Example]

< Preparation of (meth)acryl-based polymer >

[Acryl-based polymer (A)]

A four-neck flask equipped with a stirring wing, a thermometer, a nitrogen gas introducing tube, and a condenser was charged with 200 parts by weight of 2-ethylhexyl acrylate, 8 parts by weight of 2-hydroxyethyl acrylate, 0.4 part by weight of 2,2'-azobisisobutyronitrile as a polymerization initiator, and 312 parts by weight of ethyl acetate, a nitrogen gas was introduced while mildly stirring, and a polymerization reaction was performed for about 6 hours while maintaining a liquid temperature in a flask at around 65°C to prepare an acryl-based polymer (A) solution (40% by weight). A weight average molecular weight of the acryl-based polymer (A) was 500000, a glass transition temperature (Tg) was -68°C, and an acid value was 0.0.

[Acryl-based polymer (B)]

A four-neck flask equipped with a stirring wing, a thermometer, a nitrogen gas introducing tube, and a condenser was charged with 200 parts by weight of isononyl acryalte, 8 parts by weight of 2-hydroxyethyl acrylate, 0.4 part by weight of 2,2'-azobisisobutyronitrile as a polymerization initiator, and 312 parts by weight of ethyl acetate, a nitrogen gas was introduced while mildly stirring, and a polymerization reaction was performed for about 6 hours while maintaining a liquid temperature in a flask at around 65°C to prepare an acryl-based polymer (B) solution (40% by weight). A weight average molecular weight of the acryl-based polymer (B) was 540000, a glass transition temperature (Tg) was -80°C, and an acid value was 0.0.

[Acryl-based polymer (C)]

A four-neck flask equipped with a stirring wing, a thermometer, a nitrogen gas introducing tube, and a condenser was charged with 200 parts by weight of butyl acrylate, 8 parts by weight of 2-hydroxyethyl acryalte, 0.4 part by weight of 2,2'-azobisisobutyronitrile as a polymerization initiator, and 625 parts by weight of ethyl acetate, a nitrogen gas was introduced while mildly stirring, and a polymerization reaction was performed for about 6 hours while maintaining a liquid temperature in a flask at around 65°C to prepare an acryl-based polymer (C) solution (25% by weight). A weight average molecular weight of the acryl-based polymer (C) was 550000, a glass transition temperature (Tg) was -54°C, and an acid value was 0.0.

[Acryl-based polymer (D)]

A four-neck flask equipped with a stirring wing, a thermometer, a nitrogen gas introducing tube, and a condenser was charged with 180 parts by weight of 2-ethylhexyl acrylate, 20 parts by weight of ethyl acrylate, 8 parts by weight of 2-hydroxyethyl acrylate, 0.4 part by weight of 2,2'-azobisisobutyronitrile as a polymerization initiator, and 340 parts by weight of ethyl acetate, a nitrogen gas was introduced while mildly stirring, and a polymerization reaction was performed for about 6 hours while maintaining a liquid temperature in a flask at around 65°C to prepare an acryl-based polymer (D) solution (38 % by weight). A weight average molecular weight of the acryl-based polymer (D) was 650000, a glass transition temperature (Tg) was -64°C, and an acid value was 0.0.

[Acryl-based polymer (E)]

A four-neck flask equipped with a stirring wing, a thermometer, a nitrogen gas introducing tube, and a condenser was charged with 100 parts by weight of 2-ethylhexyl acrylate, 100 parts by weight of ethyl acrylate, 8 parts by weight of 2-hydroxyethyl acrylate, 0.4 part by weight of 2,2'-azobisisobutyronitrile as a polymerization initiator, and 486 parts by weight of ethyl acetate, a nitrogen gas was introduced while mildly stirring, and a polymerization reaction was performed for about 6 hours while maintaining a liquid temperature in a flask at around 65°C to prepare an acryl-based polymer (E) solution (30 % by weight). A weight average molecular weight of the acryl-based polymer (E) was 620000, a glass transition temperature (Tg) was -47°C, and an acid value was 0.0.

[Acryl-based polymer (F)]

A four-neck flask equipped with a stirring wing, a thermometer, a nitrogen gas introducing tube, and a condenser was charged with 200 parts by weight of 2-ethylhexyl acrylate, 8 parts by weight of acrylic acid, 0.4 part by weight of 2,2'-azobisisobutyronitrile as a polymerization initiator, and 312 parts by weight of ethyl acetate, a nitrogen gas was introduced while mildly stirring, and a polymerization reaction was performed for about 6 hours while maintaining a liquid temperature in a flask at around 65°C to prepare an acryl-based polymer (F) solution (40 % by weight). A weight average molecular weight of the acryl-based polymer (F) was 540000, a glass transition temperature (Tg) was -66°C, and an acid value was 29.5.

[Acryl-based polymer (G)]

A four-neck flask equipped with a stirring wing, a thermometer, a nitrogen gas introducing tube, and a condenser was charged with 200 parts by weight of 2-ethylhexyl acrylate, 3.6 parts by weight of 2-hydroxyethyl acrylate, 0.4 part by weight of acrylic acid, 0.4 part by weight of 2,2'-azobisisobutyronitrile as a polymerization initiator, and 312 parts by weight of ethyl acetate, a nitrogen gas was introduced while mildly stirring, and a polymerization reaction was performed for about 6 hours while maintaining a liquid temperature in a flask at around 65°C to prepare an acryl-based polymer (G) solution (40 % by weight). A weight average molecular weight of the acryl-based polymer (G) was 560000, a glass transition temperature (Tg) was -66°C, and an acid value was 1.3.

< Preparation of antistatic agent >

[Antistatic agent solution (a)]

A four-neck flask equipped with a stirring wing, a thermometer, and a condenser was charged with 0.1 part by weight of lithium iodide, 9.9 parts by weight of polypropylene glycol (diol type, number average molecular weight 2000), and 10 parts by weight of ethyl acetate, a nitrogen gas was introduced while mildly stirring, and mixing and stirring were performed for about 2 hours while maintaining a liquid temperature in a flask at around 80°C, to prepare an antistatic agent solution (a) (50 % by weight).

[Antistatic agent solution (b)]

A four-neck flask equipped with a stirring wing, a thermometer, and a condenser was charged with 0.1 part by weight of lithium perchlorate, 9.9 parts by weight of polypropylene glycol (diol type, number average molecular weight 2000), and 10 parts by weight of ethyl acetate, a nitrogen gas was introduced while mildly stirring, and mixing and stirring were performed for about 2 hours while maintaining a liquid temperature in a flask at around 80°C, to prepare an antistatic agent solution (b) (50 % by weight).

< Preparation of antistatic-treated polyethylene terephthalate film >

10 parts by weight of an antistatic agent (Microsolver RMd-142 manufactured by SOLVEX CO., LTD., main component: tin oxide and polyester resin) was diluted with a mixed solvent consisting of 30 parts by weight of water and 70 parts by weight of methanol to prepare an antistatic agent solution. The resulting antistatic agent solution was coated on a polyethylene terephthalate (PET) film (thickness 388μm) using a Meyer-bar, and this was dried at 130°C for 1 minute to remove a solvent to form an antistatic layer (thickness 0.2μm), thereby, an antistatic-treated polyethylene terephthalate film was prepared.

Example 1

[Preparation of pressure-sensitive adhesive solution]

The acryl-based polymer (A) solution (40 % by weight) was diluted with ethyl acetate to 20 % by weight, to 100 parts by weight of this solution were added 2.6 parts by weight of the antistatic agent solution (a) (50 % by weight), 0.6 part by weight of an isocyanurate of hexamethylene isocyanate (Coronate HX manufactured by Nippon Polyurethane Industry Co., Ltd.) as a crosslinking agent, and 0.4 part by weight of dibutyltin dilaurate (1 % by weight ethyl acetate solution) as a crosslinking catalyst, and mixing and stirring were performed for about 1 minute while maintaining at around 25°C to prepare an acryl-based pressure-sensitive adhesive solution (1). In the acryl-based pressure-sensitive adhesive solution (1), a blending amount of an alkali metal salt (lithium salt) was 0.065 part by weight relative to 100 parts by weight of an acryl-based polymer.

[Preparation of pressure-sensitive adhesive sheet]

The acryl-based pressure-sensitive adhesive solution (1) was coated on a side opposite to an antistatic-treated side of the antistatic-treated polyethylene terephthalate film prepared as described above, and this was heated at 110°C for 3 minutes to form a pressure-sensitive adhesive layer having a thickness of 20 $\mu$m. Then, a silicone-treated side of a polyethylene terephthalate film (thickness 25$\mu$m) having a silicone-treated one side was laminated on a surface of the pressure-sensitive adhesive layer to prepare a surface protecting film.

Example 2

[Preparation of pressure-sensitive adhesive solution]

According to the same manner as that of Example 1 except that 100 parts by weight of a solution obtained by diluting the acryl-based pressure-sensitive adhesive solution (B) (40 % by weight) with ethyl acetate to 20 % by weight was used in place of 100 parts by weight of a solution obtained by diluting the acryl-based pressure-sensitive adhesive solution (A) (40 % by weight) with ethyl acetate to 20% by weight, an acryl-based pressure-sensitive adhesive solution (2) was prepared. In the acryl-based pressure-sensitive adhesive solution (2), a blending amount of an alkali metal salt (lithium salt) was 0.065 part by weight relative to 100 parts by weight of an acryl-based polymer.

[Preparation of pressure-sensitive adhesive sheet]

According to the same manner as that of Example 1 except that the acryl-based pressure-sensitive adhesive solution (2) was used in place of the acryl-based pressure-sensitive adhesive solution (1), a surface protecting film was prepared.

Example 3

[Preparation of pressure-sensitive adhesive solution]

The acryl-based polymer (A) solution (40 % by weight) was diluted with ethyl acetate to 20 % by weight, to 100 parts by weight of this solution were added 1.6 parts by weight of the antistatic agent solution (b) (50 % by weight), 0.4 part by weight of an isocyanurate of hexamethylene diisocynate ("Coronate HX" manufactured by Nippon Polyurethane Industry Co., Ltd.) as a crosslinking agent, and 0.4 part by weight of dibutyltin dilaurate (1 % by weight ethyl acetate solution) as a crosslinking catalyst, and mixing and stirring for about 1 minute were performed at around 25°C to prepare an acryl-based pressure-sensitive adhesive solution (3). In the acryl-based pressure-sensitive adhesive solution (3), a blending amount of an alkali metal salt (lithium salt) was 0.040 part by weight relative to 100 parts by weight of an acryl-based polymer.

[Preparation of pressure-sensitive adhesive sheet]

According to the same manner as that of Example 1 except that the acryl-based pressure-sensitive adhesive solution (3) was used in place of the acryl-based pressure-sensitive adhesive solution (1), a surface protecting film was prepared.

Comparative Example 1

[Preparation of pressure-sensitive adhesive solution]

According to the same manner as that of Example 1 except that 100 parts by weight of a solution obtained by diluting the acryl-based pressure-sensitive adhesive solution (C) (25 % by weight) with ethyl acetate to 20 % by weight was used in place of 100 parts by weight of a solution obtained by diluting the acryl-based pressure-sensitive adhesive solution (A) (40 % by weight) with ethyl acetate to 20 % by weight, an acryl-based pressure-sensitive adhesive solution (4) was prepared. In the acryl-based pressure-sensitive adhesive solution (4), a blending amount of an alkali metal salt (lithium salt) was 0.065 part by weight relative to 100 parts by weight of an acryl-based polymer.

[Preparation of pressure-sensitive adhesive sheet]

According to the same manner as that of Example 1 except that the acryl-based pressure-sensitive adhesive solution (4) was used in place of the acryl-based pressure-sensitive adhesive solution (1), a surface protecting film was prepared.

Comparative Example 2

[Preparation of pressure-sensitive adhesive solution]

The acryl-based polymer (D) solution (38 % by weight) was diluted with ethyl acetate to 20 % by weight, to 100 parts by weight of this solution were added 2.6 parts by weight of the antistatic agent solution (b) (50 % by weight), 0.4 part by weight of an isocyanurate of hexamethylene diisocyanate (Coronate HX manufactured by Nippon Polyurethane Industry Co., Ltd.) as a crosslinking agent, and 0.4 part by weight of dibutyltin dilaurate (1 % by weight ethyl acetate solution) as a crosslinking catalyst, and mixing and stirring were performed for about 1 minute while maintaining at around 25°C, to prepare an acryl-based pressure-sensitive adhesive solution (5). In the acryl-based pressure-sensitive adhesive solution (5), a blending amount of an alkali metal salt (lithium salt) was 0.065 part by weight relative to 100 parts by weight of an acryl-based polymer.

[Preparation of pressure-sensitive adhesive sheet]

According to the same manner as that of Example 1 except that the acryl-based pressure-sensitive adhesive solution (5) was used in place of the acryl-based pressure-sensitive adhesive solution (1), a surface protecting film was prepared.

Comparative Example 3

[Preparation of pressure-sensitive adhesive solution]

According to the same manner as that of Comparative Example 2 except that 100 parts by weight of a solution obtained by diluting the acryl-based pressure-sensitive adhesive solution (E) (30 % by weight) with ethyl acetate to 20 % by weight was used in place of 100 parts by weight of a solution obtained by diluting the acryl-based pressure-sensitive adhesive solution (D) (38 % by weight) with ethyl acetate to 20 % by weight, an acryl-based pressure-sensitive adhesive solution (6) was prepared. In the acryl-based pressure-sensitive adhesive solution (6), a blending amount of an alkali metal salt (lithium salt) was 0.065 part by weight relative to 100 parts by weight of an acryl-based polymer.

[Preparation of pressure-sensitive adhesive sheet]

According to the same manner as that of Example 1 except that the acryl-based pressure-sensitive adhesive solution (6) was used in place of the acryl-based pressure-sensitive adhesive solution (1), a surface protecting film was prepared.

Comparative Example 4

[Preparation of pressure-sensitive adhesive solution]

The acryl-based polymer (F) solution (40 % by weight) was diluted with ethyl acetate to 20 % by weight, to 100 parts by weight of this solution were added 2.6 parts by weight of the antistatic agent solution (a) (50 % by weight), 0.8 part by weight of 1,3-bis(N,N-diglycidylaminomethyl)cyclohexane "(TETRAD-C" manufactured by Mitsubishi Gas Chemical Company, Inc.) as a crosslinking agent, and 0.3 part by weight of a trimethylolpropane/tolylene diisocyante trimer adduct ("Coronate L" manufactured by Nippon Polyurethane Industry Co., Ltd.), and mixing and stirring were performed for about 1 minute while maintaining at around 25°C, to prepare an acryl-based pressure-sensitive adhesive solution (7). In the acryl-based pressure-sensitive adhesive solution (7), a blending amount of an alkali metal salt (lithium salt) was 0.065 part by weight relative to 100 parts by weight of an acryl-based polymer.

[Preparation of pressure-sensitive adhesive sheet]

According to the same manner as that of Example 1 except that the acryl-based pressure-sensitive adhesive solution (7) was used in place of the acryl-based pressure-sensitive sensitive adhesive solution (1), a surface protecting film was prepared.

Comparative Example 5

[Preparation of pressure-sensitive adhesive solution]

According to the same manner as that of Example 1 except that 100 parts by weight of a solution obtained by diluting the acryl-based pressure-sensitive adhesive solution (G) (40 % by weight) with ethyl acetate to 20 % by weight was used in place of 100 parts by weight of a solution obtained by diluting the acryl-based pressure-sensitive adhesive solution (A) (40 % by weight) with ethyl acetate to 20 % by weight, an acryl-based pressure-sensitive adhesive solution (8) was prepared. In the acryl-based pressure-sensitive adhesive solution (8), a blending amount of an alkali metal salt (lithium salt) was 0.065 part by weight relative to 100 parts by weight of an acryl-based polymer.

[Preparation of pressure-sensitive adhesive sheet]

According to the same manner as that of Example 1 except that the acryl-based pressure-sensitive adhesive solution (8) was used in place of the acryl-based pressure-sensitive adhesive solution (1), a surface protecting film was prepared.

Comparative Example 6

[Preparation of pressure-sensitive adhesive solution]

According to the same manner as that of Example 1 except that 4.0 parts by weight of the antistatic agent solution (a) (50 % by weight) was used in place of 2.6 parts by weight of the antistatic agent solution (a) (50 % by weight), an acryl-based pressure-sensitive adhesive solution (9) was prepared. In the acryl-based pressure-sensitive adhesive solution (9), a blending amount of an alkali metal salt (lithium salt) was 0.10 part by weight relative to 100 parts by weight of an acryl-based polymer.

[Preparation of pressure-sensitive adhesive sheet]

According to the same manner as that of Example 1 except that the acryl-based pressure-sensitive adhesive solution (9) was used in place of the acryl-based pressure-sensitive adhesive solution (1), a surface protecting film was prepared.
Regarding pressure-sensitive adhesive sheets obtained in the aforementioned Examples and comparative Examples, a peeling electrification voltage, assessment of stainability (staining property), occurrence of peeling off, and an adhesive strength were assessed by the following conditions.

<Measurement of peeling electrification voltage>

A pressure-sensitive adhesive sheet is cut into a size of a width of 70 mm and a length of 130 mm, a separator is peeled, and the sample is adhered to a surface of a polarizing plate (SEG1425EWVAGS2B manufactured by Nitto Denko Corporation, size; width 70 mm, length 100 mm) laminated to an acryl plate having a thickness of 1 mm, a width of 70 mm and a length of 100 mm from which electricity has been removed in advance, with a hand roller, so that one end is protruded by 30 mm.
After allowing to stand for one day under the environment of 23°Cx50 %RH, a sample is set at a prescribed position as shown in Fig. 1. One end protruding by 30 mm is fixed on an automatic winding machine, and the sample is peeled at a peeling angle of 150° and a peeling rate of 10 m/min. A voltage at a polarizing plate surface generated thereupon was measured with an electrostatic voltmeter (KSD-0103 manufactured by Kasuga Denki, INC.) fixed at a prescribed position. Measurement was performed under the environment of 23°Cx50 %RH.

< Assessment of staining on an adherend (subject to be protected) >

The prepared surface protecting film was cut into a size of a width of 30 mm and a length of 80 mm, a separator was peeled, and this was contact-bonded on a polarizing plate (SEG1425EWVAGS2B manufactured by NITTO DENKO CORPORATION, size: width 70 mm, length 100 mm) with a hand roller. After allowed to stand for 1 day under environment of 23°Cx50 %RH, a surface protecting film was peeled from a polarizing plate with a hand, and the state of staining of a polarizing plate surface thereupon was observed with naked eyes. Assessment criteria are as follow.

Case of observation of no staining: o

Case of observation of staining: ×

<Measurement of pressure-sensitive adhering force (adhesive strength)>

A triacetylcellulose film (Fuji TAC manufactured by Fuji Photo Film Co., Ltd.) having a thickness of 90 $\mu$m was cut into a width of 70 mm and a length of 100 mm, and this was immersed in an aqueous sodium hydroxide solution (10 % by weight) at 60°C for 1 minute, and washed with distilled water to prepare an adherend.

The adherend was allowed to stand for 1 day under the environment of 23°Cx50 %RH, to obtain an adherend for assessing a pressure-sensitive adhering force. A pressure-sensitive adhesive sheet which had been cut into a size of a width of 25 mm and a length of 100 mm was laminated on the aforementioned adherend for assessment at a pressure of 0.25 MPa to prepare an assessment sample. After allowed to stand for 30 minutes after lamination, a pressure-sensitive adhering force when peeled at a peeling rate of 30 m/min and a peeling angle of 180° using a universal tensile testing machine was measured. Measurement was performed under the environment of 23°Cx50 %RH.

The above results are shown in Table 1.

**Table 1**

|  | Peeling electrification voltage [kV] | Staining property [-] | Adhesive strength [N/25mm] |
|---|---|---|---|
| **Example 1** | -0.2 | O | 1. 3 |
| **Example 2** | -0.2 | O | 0.8 |
| **Example 3** | -0.2 | O | 1. 9 |
| **Comparative Example 1** | -1.1 | O | 1.4 |
| **Comparative Example 2** | -0. 7 | O | 1. 8 |
| **Comparative Example 3** | -1.2 | O | 3.9 |
| **Comparative Example 4** | - 1. 3 | O | 1.0 |
| **Comparative Examples 5** | -1.0 | O | 1.2 |
| **Comparative Example 6** | 0.0 | × | 0.5 |

From results of the Table 1, it was made clear, when the pressure-sensitive adhesive composition prepared in accordance with the present invention was used (Examples 1 to 3), a peeling electrification voltage on a polarizing plate is suppressed, and effect of reducing staining is also excellent in any of Examples. To the contrary, in Comparative Examples 1 to 3 using a pressure-sensitive adhesive composition comprising a (meth)acryl polymer containing, as a component, a (meth)acryl monomer having an alkyl group of a carbon number of less than 6, and in Comparative Examples 4 and 5 using a pressure-sensitive adhesive composition comprising an acryl-based polymer having an acid value greater than 1, occurrence of staining was not seen, but such the result was obtained that a peeling electrification voltage on a polarizing plate was high. In Comparative Example 6 using a pressure-sensitive adhesive composition in which an alkali metal salt was blended at 0.1 part by weight or more relative to 100 parts by weight of an acryl polymer, a peeling electrification voltage on a polarizing plate was suppressed low, but such the result was obtained that staining on a polarizing plate occurs. Therefore, in any of Comparative Examples, such the result was obtained that both of suppression of a peeling electrification voltage on a polarizing plate which is an adherend (subject to be protected), and suppression of occurrence of staining cannot be realized at the same time, and it was made clear that they are not suitable in a surface protecting film.

In addition, in pressure-sensitive adhesive sheets of Examples 1 to 3 of the present invention, a 180° peeling pressure-sensitive adhering force at a peeling rate of 30m/min is in a range of 0.1 to 6N/25mm, and it is seen that the sheet is a pressure-sensitive adhesive sheet which can be applied as a re-peeling type surface protecting film.

**Claims**

1. A pressure-sensitive adhesive composition, which comprises a (meth)acryl-based polymer comprising, as a main component, a (meth)acryl-based monomer having an alkyl group of a carbon number of 6 to 14, a polyether polyol compound and an alkali metal salt, wherein an acid value of the (meth)acryl-based polymer is 1.0 or lower, and the alkali metal salt is contained at an amount of less than 0.1 part by weight relative to 100 parts by weight of the (meth)acryl-based polymer.

2. The pressure-sensitive adhesive composition according to claim 1, wherein the alkali metal salt is a lithium salt.

3. The pressure-sensitive adhesive composition according to any one of claims 1 to 2 wherein the (meth)acryl-based polymer further comprises a (meth)acryl-based monomer having a hydroxyl group.

4. The pressure-sensitive adhesive composition according to any one of claims 1 to 3, wherein the pressure-sensitive adhesive composition comprises a modified isocyanurate of an isocyanate compound as a crosslinking agent.

5. A pressure-sensitive adhesive layer, which is obtainable by crosslinking a pressure-sensitive adhesive composition as defined in any one of claims 1 to 4.

6. A pressure-sensitive adhesive sheet comprising a pressure-sensitive adhesive layer, which is obtainable by crosslinking a pressure-sensitive adhesive composition as defined in any one of claims 1 to 4 on one side or both sides of a support.

7. A surface protecting film comprising a pressure-sensitive adhesive layer, which is obtainable by crosslinking a pressure-sensitive adhesive composition as defined in any one of claims 1 to 4 on one side or both sides of a support which is provided with an antistatic-treated plastic film.

**Patentansprüche**

1. Druckempfindliche Klebstoffzusammensetzung, die ein Polymer auf (Meth)acryl-Basis, das als Hauptbestandteil ein Monomer auf (Meth)acryl-Basis mit einer Alkylgruppe mit einer Kohlenstoffzahl von 6 bis 14 umfasst, eine Polyetherpolyolverbindung und ein Alkalimetallsalz umfasst, wobei die Säurezahl des Polymers auf (Meth)acryl-Basis 1,0 oder weniger beträgt, und das Alkalimetallsalz in einer Menge von kleiner 0,1 Gewichtsteilen, bezogen auf 100 Gewichtsteile des Polymers auf (Meth)acryl-Basis, enthalten ist.

2. Druckempfindliche Klebstoffzusammensetzung nach Anspruch 1, wobei das Alkalimetallsalz ein Lithiumsalz ist.

3. Druckempfindliche Klebstoffzusammensetzung nach einem der Ansprüche 1 bis 2, wobei das Polymer auf (Meth)acryl-Basis des Weiteren ein Monomer auf (Meth)acryl-Basis mit einer Hydroxylgruppe umfasst.

4. Druckempfindliche Klebstoffzusammensetzung nach einem der Ansprüche 1 bis 3, wobei die druckempfindliche Klebstoffzusammensetzung ein modifiziertes Isocyanurat einer Isocyanatverbindung als ein Vernetzungsmittel umfasst.

5. Druckempfindliche Klebstoffschicht, die durch das Vernetzen einer druckempfindlichen Klebstoffzusammensetzung, wie sie in einem der Ansprüche 1 bis 4 definiert ist, erhalten werden kann.

6. Druckempfindliche Klebefolie, die eine druckempfindliche Klebstoffschicht, die durch das Vernetzen einer druckempfindlichen Klebstoffzusammensetzung, wie sie in einem der Ansprüche 1 bis 4 definiert ist, erhalten werden kann, auf einer oder beiden Seiten eines Trägers umfasst.

7. Oberflächenschutzfilm, der eine druckempfindliche Klebstoffschicht, die durch das Vernetzen einer druckempfindlichen Klebstoffzusammensetzung, wie sie in einem der Ansprüche 1 bis 4 definiert ist, erhalten werden kann, auf einer oder beiden Seiten eines Trägers, versehen mit einer antistatisch behandelten Kunststoff-Folie, umfasst.

**Revendications**

1. Composition adhésive auto-collante, qui comprend un polymère à base de (méth)acryle comprenant, en tant que composant principal, un monomère à base de (méth)acryle contenant un groupe alkyle de 6 à 14 atomes de carbone, un composé de polyétherpolyol et un sel de métal alcalin, dans laquelle l'indice d'acide du polymère à base de (méth)acryle est de 1,0 ou moins, et le sel de métal alcalin est contenu dans une quantité inférieure à 0,1 partie en poids pour 100 parties en poids du polymère à base de (méth)acryle.

**2.** Composition adhésive auto-collante selon la revendication 1, dans laquelle le sel de métal alcalin est un sel de lithium.

**3.** Composition adhésive auto-collante selon l'une quelconque des revendications 1 et 2, dans laquelle le polymère à base de (méth)acryle comprend en outre un monomère à base de (méth)acryle contenant un groupe hydroxyle.

**4.** Composition adhésive auto-collante selon l'une quelconque des revendications 1 à 3, dans laquelle la composition adhésive auto-collante comprend un isocyanurate modifié d'un composé isocyanate en tant qu'agent de réticulation.

**5.** Couche adhésive auto-collante, qui est susceptible d'être obtenue par réticulation d'une composition adhésive auto-collante telle que définie dans l'une quelconque des revendications 1 à 4.

**6.** Feuille adhésive auto-collante comprenant une couche adhésive auto-collante, qui est susceptible d'être obtenue par réticulation d'une composition adhésive auto-collante telle que définie dans l'une quelconque des revendications 1 à 4 sur une face ou sur les deux faces d'un support.

**7.** Film protecteur de surface comprenant une couche adhésive auto-collante, qui est susceptible d'être obtenue par réticulation d'une composition adhésive auto-collante telle que définie dans l'une quelconque des revendications 1 à 4 sur une face ou sur les deux faces d'un support qui est muni d'un film plastique traité pour être antistatique.

【 Fig.1 】

Schematic view of an electrostatic measuring part

Electrostatic voltmeter

100mm

Pressure-sensitive adhesive sheet

Polarizing plate

Acryl plate

70mm

100mm

Sample fixing base

20mm